# EUROPEAN PATENT SPECIFICATION

(11) **EP 1 044 176 B1**
(45) Date of publication and mention of the grant of the patent: **02.04.2003**
(21) Application number: 99900562.2
(22) Date of filing: 08.01.1999
(51) Int. Cl.: C04B 28/14, C08L 91/06

(54) **GYPSUM PRODUCT**
GIPSPRODUKT
PRODUIT DE GYPSE

(30) Priority: 08.01.1998 GB 9800368
(43) Date of publication of application: 18.10.2000
(73) Proprietor: Exxonmobil Research and Engineering Company, Wilmington, Delaware 19808 (US)
(72) Inventor: BOELEE, Scotia, Tunbridge Wells, Kent TN2 5BG (GB)
(74) Representative: Jones, Helen Marjorie Meredith
(86) International application number: GB9900064
(87) International publication number: WO99035103

(56) References cited:
- WO-A-98/09925
- US-A- 4 315 957
- US-A- 5 437 722
- US-A- 5 695 553
- PATENT ABSTRACTS OF JAPAN vol. 098, no. 008, 30 June 1998 & JP 10 067980 A (MITSUBISHI CHEM CORP), 10 March 1998
- DATABASE WPI Week 8635 Derwent Publications Ltd., London, GB; AN 86-229176 XP002100852 & JP 61 159494 A (SANWA KAGAKU KK)

## Description

This invention relates to a gypsum product and to a process for its manufacture. More particularly, this invention relates to a foamed gypsum product of improved water resistance and/or reduced density and to a process, preferably to a continuous process, for its manufacture.

Gypsum board (or plaster board or wallboard) is used extensively in the construction industry. It typically comprises a substantially flat core of set gypsum on either side of which a liner may be adhered. A liner typically comprises paper. The core may be reinforced; for example, reinforced with glass fibres.

Gypsum products (or Plaster of Paris or plaster products) are produced by mixing anhydrous calcium sulphate or calcium sulphate hemihydrate with water, and permitting the mixture to set thereby producing calcium sulphate dihydrate. Often the slurry is foamed by incorporating a preformed solution of foaming agent in water (a surface active material) before adding to the mould means. A pervasive problem with gypsum products, however, is that calcium sulphate dihydrate absorbs water and this reduces the strength of the gypsum product. Because of this, plaster board (for example) is required, at least in uses where a relatively high humidity is anticipated (for example, kitchens or bathrooms) to be substantially moisture resistant and this requires the presence of a hydrophobing agent. ("Hydrophobing" is a term used in the art to denote a method of preventing, or reducing water absorption).

Silicone oil has previously been used as a hydrophobing agent for gypsum products. It is, however, expensive and in relatively short supply. It also has difficulty in providing a moisture resistance of less than 5 wt % water absorption in the test hereinafter mentioned.

In US-A-5437722 an aqueous emulsion comprising a hydrocarbon wax, a montan wax and emulsifier/stabiliser system and also including a polyvinyl alcohol, is used to render gypsum products water resistant. The emulsifier system may include non-ionic or anionic surfactant and alkali. Examples of non ionic surfactants are alkylphenoxypoly(ethyleneoxy) ethanols, sorbitan fatty acid esters and polyoxyethylene sorbitan fatty acid esters. Examples of anionic surfactants are saponified fatty acids.

Patent document US-A-5695553 discloses a poly(phenolate carboxylate) resin emulsifier with a lignosulfonic acid dispersant for use in gypsum products. Patent document US-A-4315957 teaches the use of nonionic emulsifiers which may be combined with sulphated anionic emulsifiers.

In our copending application number PCT/GB97/02366, unpublished at the priority date of the present invention, we describe a foamed gypsum product which is hydrophobed by incorporation of an aqueous emulsion comprising a hydrocarbon wax, a montan wax and a colloid stabilised emulsifier system. The preferred colloid stabilised emulsifier system comprises either organic or, more preferably, inorganic colloidal materials. One example is a montmorillonite clay based system in combination with a sodium naphthalene sulphonate.

In the above mentioned PCT application, a comparative example uses an emulsifier system based on a combination of a nonionic surfactant, which was not specifically defined, with an anionic surfactant again, not specifically defined. The emulsifier system used in that comparative example was in fact a combination of an alkyl phenyl ethoxylate with a soap-type anionic surfactant. The worked example using that emulsifier system did not work. In fact it is now believed that the anionic surfactant caused collapse of the foam or that, upon addition to a slurry formed using relatively hard water, the anionic surfactant was precipitated out of the system by the hardness ions.

The above mentioned PCT application also discloses a comparative example using a nonionic surfactant based emulsifier system including no anionic emulsifier. Whilst this gave some improvement over the mixed system, it was found that using a high enough level of emulsion in the gypsum product to achieve adequate density and/or water absorption figures lead to over-wetting of paper used for the gypsum product and delamination during production.

In the present invention there is a provided a process for producing a foamed gypsum product involving the following steps:
a) a slurry of gypsum is formed in water
b) the slurry is introduced to mould means and allowed to hydrate,
in which a hydrophobing agent comprising an emulsion of a mixture of a petroleum derived hydrocarbon wax and montan wax in an aqueous continuous phase containing an emulsifier system is added to the slurry before introduction into the mould means, and is characterised in that the emulsifier system comprises:
i) a nonionic surfactant characterised by a foaming ability of at least 300 and a cloud point (in saline per DIN 53917) of at least 50; and
ii) an anionic dispersing agent which is a sulphated compound.

Preferably the anionic dispersant is a so called acid stable compound, that is the compound is ionised over a wide range of pH's including acidic pH. The acid stability can be judged by the pKₐ of the conjugate acid, which should preferably be less than 4, more preferably less than 3, for instance 2 or less. The anionic dispersant is generally a sulphate or a sulphonate.

A suitable class of anionic dispersants are sulphated naphthalene/formaldehyde condensates, for instance having molecular weight in the range 6000 to 40000. These compounds are also known as naphthalene sulphonates. Other aryl sulphonates may also be used. The anionic dispersant is generally used in the emulsion in the form of its sodium salt. Alternatively potassium, ammonium, or even divalent metal salts such as calcium or magnesium, may be used. Suitable compounds are available from BASF AG under the trade name Tamol (trademark).

The nonionic surfactant must be relatively water soluble. The water solubility of non ionic surfactants can be determined by standard test method DIN 53917 in saline. The component should have a cloud point of at least 50, for instance more than 60, up to around 100, for instance approximately 75.

We have found that the nonionic surfactant giving optimum performance is one which has a high foaming ability. Foaming ability can be measured by standard test methods DIN 53902. For instance the test should be carried out according to the method given in sheet 1 of that standard test method, at 40°C, with the surfactant being used in a concentration of 2 g/l in water containing 1.8 mmol Ca ions/l, the duration of the test being 30 seconds. The foaming ability should be at least 300, more preferably at least 500, for instance up to 750. Nonionic surfactants with foaming ability using the above mentioned test method of around 600 are available.

The nonionic surfactant is generally an ethoxylated higher alkyl, alkenyl, alkanoyl or alkenoyl compound. Alternatively ethoxylated aryl compounds may be used, for instance ethoxylated alkyl phenol derivatives. Preferably the compound is a C₈₋₁₈-alkanol ethoxylated with 3 to 30 equivalents of ethylene oxide, for instance a C₁₂₋₁₈-alkanol ethoxylated with 10 to 20 equivalents of ethylene oxide. Suitable compounds are available under the trade name Lutensol (trademark) from BASF AG. It may alternatively be possible to use polyglycosylated alkyl, alkenyl, alkanoyl, alkenoyl and aryl compounds for instance alkyl polyglucosides.

The use of an acid stable anionic dispersant, it is believed, avoids the addition of the emulsion resulting in the collapse of the foam in the gypsum slurry. Accordingly the density of the product is optimised. The use of the anionic dispersant in combination with non ionic surfactant avoids the use of such high concentrations of nonionic dispersant in the gypsum slurry which can lead to over-wetting of paper used in the gypsum product and delamination during production. The preferred surfactant makes the emulsion suitable for use with gypsum slurries made up in hard water, for instance water having hardness value of at least 100 ppm Ca²⁺ even more than 150 ppm Ca ²⁺¹_{,} for instance at least 200 ppm Ca²⁺.

The use of the high foaming non ionic surfactant is believed also to contribute to optimisation of the gypsum slurry foam and the density of the final product. The preferred combination of surfactants in the emulsifier system allows high levels of wax to be incorporated into the final product for optimum hydrophobing of the gypsum product.

The emulsifier system has process advantages also in production of non-foamed products, for instance, other products made on continuous lines such as fire resistance board. The system provides good compatibility with the equipment

The petroleum-derived hydrocarbon wax (a) is preferably one with a high melting point and a low oil content. A preferred such wax is a paraffin wax, such as fully refined paraffin wax. Fully refined paraffin waxes are generally obtained from highly paraffinic refinery streams such as those obtained from the solvent dewaxing of distillates and other lube fractions. The product is further typically characterised as follows:

| **CHARACTERISTICS** | **TEST METHOD** | **SPECIFICATION** | |
|---|---|---|---|
| | | **MIN** | **MAX** |
| Congealing Point (°C) | ASTM D938 | 55 | 69 |
| Oil in Wax (%) | ASTM D721 | | 1 |
| Penetration at 25°C (mm/10) | ASTM D1321 | 10 | 20 |
| Penetration at 50°C (mm/10) | ASTM D1321 | | 80 |
| Viscosity (cSt @ 100°C) | ASTM D445 | 3 | 7 |

An example of a fully refined paraffin wax which has been found to be entirely satisfactory, and which satisfies the above specification, is MOBILWAX 135 (derived from the 150 SPN stream) as supplied by Mobil Oil Company Limited; MOBILWAX 145 or 150 (derived from the 300 or 450 SPN stream) are also suitable. While these waxes are hydrofinished to give a white colour and good odour, unfinished wax (which differs only in colour and odour) is also suitable for use in accordance with the invention. The petroleum-derived hydrocarbon wax a) suitably comprises from 20 to 40 wt % of the aqueous emulsion, preferably from 25 to 35 wt % of the aqueous emulsion.

The montan wax or lignite wax b) is another wax with a high melting point. It is preferably used in crude (or raw) form. Such a product is typically characterised as follows:

| CHARACTERISTICS | TEST METHOD | SPECIFICATION | | PREFERRED SPECIFICATION | |
|---|---|---|---|---|---|
| | | MIN | MAX | MIN | MAX |
| Congealing Point (°C) | ASTM D938 | 67 | 80 | 75 | 80 |
| Acid Value (mgKOH/g) | ASTM D1980 | 10 | 37 | 10 | 20 |
| Saponification Value (mgKOH/g) | ASTM D1962 | 35 | 100 | 65 | 90 |
| Ash Content (% wt) | ASTM D482 | | 1 | | 1.0 |
| Density at 20°C (g/cm³) | ASTM D1298 | 0.95 | 1.04 | 0.95 | 1.04 |
| Viscosity (cSt at 90°C) | ASTM D445 | 20 | 400 | 150 | 400 |
| Viscosity (cSt at 100°C) | ASTM D445 | 20 | 200 | 60 | 150 |

The montan wax b) suitably comprises from 10 to 20 wt % of the aqueous emulsion, preferably from 11 to 15 wt % of the aqueous emulsion.

The emulsifier system (i.e. the total of two or more components of a multi-component system) is suitably present in an amount from 0.5 to 6 wt %, preferably 1.2 to 5 wt %, more preferably 1.5 to 4% of the aqueous emulsion. The ratio of the non-ionic and anionic components is preferably in the range 5:1 to 1:5, more preferably 3:1 to 1:3, most preferably 2:1 to 1:2.

In the invention the slurry in water, preferably contains 100 parts by weight of gypsum and from 0.5 to 10, preferably from 1 to 5 % by weight of an emulsion as herein defined. The slurry suitably contains 50-60 weight % gypsum and 40-50 weight % water, preferably about 55% gypsum. An accelerator is usually added, for instance a slurry mix from a previous batch.

The slurry preferably contains a foaming agent. Preferably the product is a paper lined board and the process thus preferably includes a step of foaming, usually involving formation of a pre-formed foam by vigorous stirring of the foaming agent in water, followed by mixing the prefoam into preformed gypsum slurry containing the emulsion.

This invention also provides a water-resistant gypsum product which comprises the set composition. Whilst the product may be an unlined board, the invention is particularly applicable to a product which comprises a core product of a set such composition sandwiched between a pair of liners usually paper liners. Another suitable product is fire resistant board which has a glass fibre scrim embedded in each surface of the gypsum board, which is generally unfoamed. The invention includes also the emulsion itself and the process for making it.

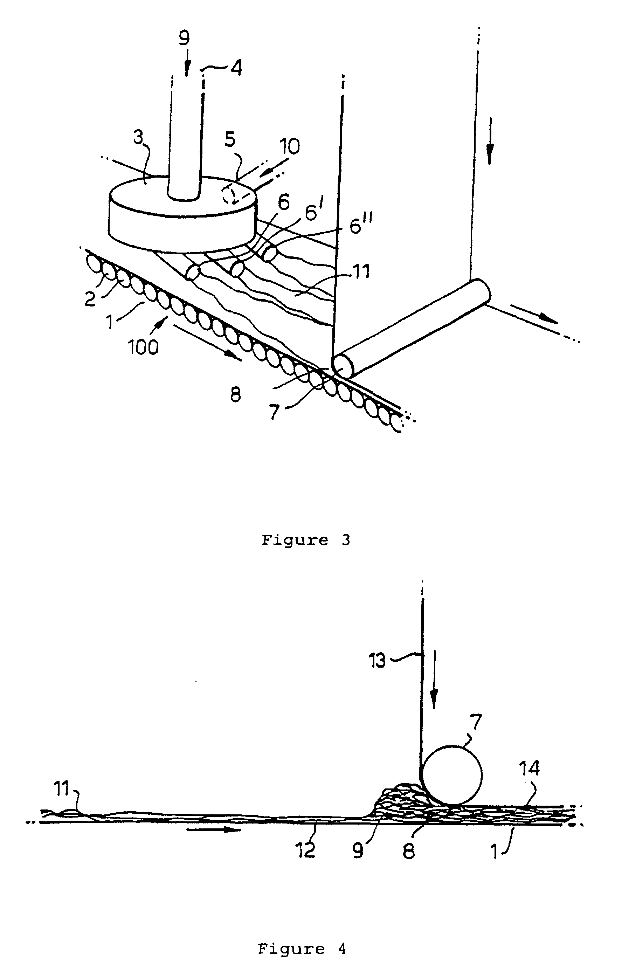

The invention further provides a process for the preparation of a water-resistant gypsum board product, which process comprises forming a mixture which is a slurry in water containing 100 parts by weight of gypsum and from 0.5 to 5 parts by weight of an emulsion according to the invention; forming a layer of the mixture in a mould means and drying the layer of gypsum mixture, while permitting hydration of the gypsum, for form a board product. Preferably the process is continuous. The process may be for forming tiles or blocks or boards. Blocks may be formed in moulds from which they are removed when set. Tiles or boards may be formed by spreading a layer of the gypsum mixture on a first planar substrate, a second planar substrate is positioned over the layer to form an assembly, and the mixture is allowed to set in the assembly. A gasket may be provided between the planar substrates. Where the product is a lined board, the first and second planar substrates are constituted by liner, for instance paper, usually supported in a mould. Where the product is to be unlined, the planar substrates are removed when the product is set. Where the product is a block, it is usually removed from a mould before the mixture is completely set, but when it is hard enough to handle. Where the product is a fire resistant board a fibreglass scrim is embedded in each side of the slurry in the mould means by feeding to each side of the poured (unfoamed) slurry before the nip forming a dam in an apparatus similar to that shown in Figures 3 and 4 below.

This invention includes the use of an aqueous emulsion of the invention to furnish a gypsum product with water resistance and the use of an aqueous emulsion of the invention to aid foaming of a gypsum slurry, for instance to reduce the density of the set foamed gypsum product.

Figure 1 shows the water absorption results of the product of the comparative example.

Figure 2 shows the water absorption results of the product of the example of the invention.

Figures 3 and 4 are a schematic representations of a foaming station for lined gypsum board.

The following Example illustrate the invention.

### EXAMPLE

First the wax phase was prepared by dissolving 12 wt % crude montan wax (Crude Montan Wax supplied by Schuemann Sabol GmbH) in 30 wt % of fully refined paraffin wax (MOBILWAX 135 supplied by Mobil Oil Company Limited) at a suitable raised temperature. 1% by weight sodium naphthalene sulphonate (a sulphated naphthalene formaldehyde condensate having a molecular weight of about 6000 to 40000) from the TAMOL (trademark) range supplied by BASF was added to water to form the aqueous phase and stirred for a period. 0.45% Non ionic surfactant (added as a 90% aqueous solution) (a C₁₃ alkanol - 12 mole ethoxylate available as Lutensol TO12 series) was then added to the aqueous phase and stirred for a period. The temperature of the wax melt was lowered to 100°C and the wax phase was next added to the aqueous phase heated to a suitable temperature, with stirring for a suitable period to form a pre-emulsion. The pre-emulsion still at a raised temperature was next recycled through a homogeniser, with no impressed pressure, for a full pass. Gradually, the pressure was increased to a value in the range 20-25 MPa (220 bar) and the emulsion recycled for a further pass to form an aqueous emulsion in accordance with the invention.

The emulsion was then tested for its performance in the production of a gypsum product. A conventional foaming agent was mixed with vigorous stirring with a suitable quantity water to generate a foam mixture. A gypsum slurry mix was prepared by adding a predetermined amount (1.4, 1.6 or 1.8% by weight based on the amount of gypsum) of wax emulsion (according to the invention or comparative) to around 40 parts by weight water along with predetermined amounts of a wetting agent, starch and an accelerator in a total amount of 0.38 parts by weight. To this around 58 parts by weight gypsum was added with stirring. The pre-generated foam mix was next added to the gypsum slurry and stirred to form a foamed gypsum slurry. The slurry was poured into a paper lined mould of 300 x 300 x 12.5 mm dimension and a second sheet of paper placed on top to form a gypsum coupon which was then dried in three stages of successively lower temperatures and longer times to a constant weight. The density and 2 hour water absorption were then determined. The density was calculated by dividing the dry weight of the test specimen by the mould volume. The water absorption was determined by cutting a test specimen measuring 280 x 280 mm from the coupon and immersing this specimen in a water bath at 23°C covered with 25 to 35 mm of water for 2 hours. Its weight before and after immersion was measured and the percentage increase calculated.

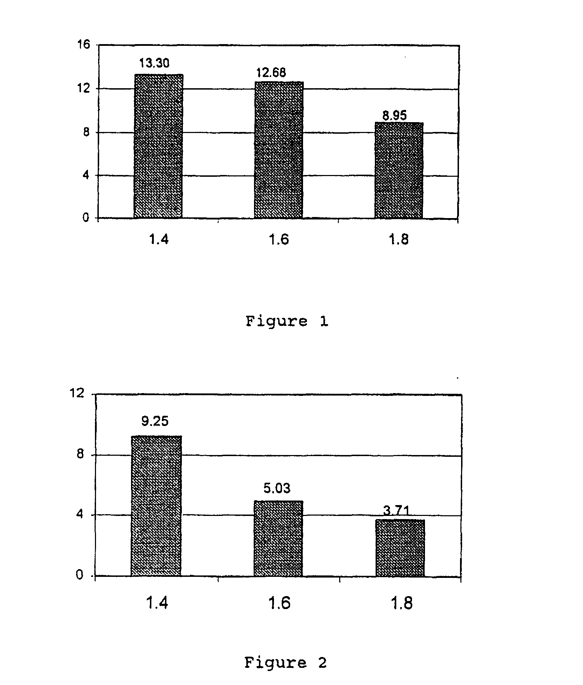

The results, which include comparative tests, are shown in figures 1 and 2. In these tests density and 2 hr water absorption were measured and reported using a the emulsifier system of the invention and also as comparison, based on the colloid emulsified system of the above mentioned PCT publication, in which the same amounts of wax emulsion containing an emulsifier system of a bentonite clay and sodium naphthalene sulphonate.

A further example has also been conducted in which the emulsion containing Mobilwax 135, which has a melting point (congealing point) in the range 57-60°C and a maximum content of oil of 1.0wt%, is used at a level of 4% by weight. This example is then repeated, but using emulsions (at 4% by weight in the gypsum) in which the Mobil wax 135 is replaced by waxes having higher (63-66°C , and 66-69°C, respectively) and lower (54-57°C) melting/congealing points. When used at the same levels in the emulsion, the emulsion (at the same level in the gypsum) produced good results for water absorption. The values were less than 5%, indeed less than 2.5%, in each case.

In Figures 3 and 4 there is shown a forming station for gypsum board manufacture is shown generally at 100. It comprises a conveyor 1 which is formed from an array of like, generally coplanar, parallel driven rollers 2 which are rotatable in the same sense. Above the conveyor is a manifold mixing box 3 into which entry conduits 4 and 5 and a plurality of exit nozzles 6,6',6" are flowably connected. A contra-rotatable roller 7 is biased toward rollers 2 to form a nip 8.

In use, a plaster slurry 9 and the pre-generated foam mix 10, detailed above, are supplied under gravity, in an appropriate ratio, though conduits 4 and 5, respectively, into mixing box 3 where they are mixed to form a foamed plaster mixture 11. The foamed plaster mixture is then sprayed through the plurality of nozzles 6,6',6" onto a lower paper liner 12 which is being continuously conveyed, in the direction indicated, by rollers 2. The foamed plaster mixture becomes substantially evenly distributed across, and adheres to, the paper liner. An upper paper liner 13 is continuously conveyed, in the direction indicated by roller 7 into nip 8 where buildup of, the foamed plaster mixture into a dam 9 occurs and the plaster mixture adheres to the paper 13. Uncured plasterboard 14 is continuously conveyed downstream from the forming station along a long conveyor belt allowing the chemical reactions of setting to take place. It is then cut to the required length; and dried by passage through multideck drying zones.

In an alternative process, which is not illustrated, a non-foamed slurry is poured into block shaped moulds, in which it is allowed to set partially. The blocks are hard enough to handle after a few minutes, at which time they are pushed from the mould using, for instance, a hydraulic jack, and are conveyed to an oven to complete the setting/drying process.

## Claims

1. A process for producing a gypsum product involving the following steps:
a) a slurry of gypsum is formed in water
b) the slurry is introduced to mould means and the gypsum allowed to hydrate,
in which a hydrophobing agent comprising an emulsion of a mixture of a petroleum derived hydrocarbon wax and montan wax in an aqueous continuous phase containing an emulsifier system is added to the slurry before introduction into the mould means, and is **characterised in that** the emulsifier system comprises:
i) a nonionic surfactant **characterised by** a foaming ability of at least 300 and a cloud point of at least 50; and
ii) an anionic dispersant which is a sulphated compound.

2. A process according to claim 1 in which the process is continuous and involves pouring of the slurry onto a continuously moving belt.

3. A process according to claim 1 or 2 in which the gypsum slurry is foamed before introduction into the mould means.

4. A process according to claim 1 in which the anionic dispersant is a sulphate or a sulphonate.

5. A process according to claim 4 in which the anionic dispersant is a polymeric compound, preferably an aryl sulphonate.

6. A process according to claim 5 in which the anionic dispersant is a naphthalene sulphonate, preferably the sodium salt.

7. A process according to any preceding claim in which the nonionic surfactant is a higher alkanol, alkenol, alkanoic or alkenoic acid or aryl alcohol (including phenol) or carboxylic acid ethoxylated with at least 2 equivalents of ethylene oxide, preferably up to 100, for instance 3 to 30 equivalents, ethylene oxide.

8. A process according to claim 7 in which the nonionic surfactant is a C₈₋₁₈-alkanol or -alkenol ethoxylated with 3 to 30 moles of ethylene oxide.

9. A process according to any preceding claim in which the petroleum-derived hydrocarbon wax (a) is one with a high melting point and a low oil content, preferably a paraffin wax, more preferably such a wax having a congealing point in the range 55 to 69°C (ASTM D938) a penetration value (by ASTM D1321) at 25°C in the range 10 to 20 mm/10 and at 50°C at least 50 mm/10 and a viscosity at 100°C (by ASTM D445) in the range 3-7 cSt.

10. A process according to any preceding claim in which the montan wax has a congealing point in the range 67-80°C, an acid value (by ASTM D1980) in the range 10 to 37 mgKOH/g, a saponification value (by ASTM D1962) in the range 35 to 100 mgKOH/g, a viscosity (by ASTM D445) at 90°C in the range 20-400 cSt and at 100°C in the range 20 to 200 cSt.

11. A process according to any preceding claim in which, in the emulsifier, the montan wax is present in an amount in the range 10 to 20% by weight, the hydrocarbon wax is present in an amount in the range 20 to 40% by weight and the emulsifier system is present in an amount in the range 1 to 6% by weight.

12. A process according to any preceding claim in which the ratio of the anionic dispersant to nonionic surfactant in the emulsion is in the range 5:1 to 1:5, preferably 3:1 to 1:3.

13. A process according to any preceding claim in which the emulsion is added to the gypsum slurry in an amount in the range 0.5 to 10%, preferably in the range 1.0 to 5.0% by weight based on the weight of gypsum.

14. A process according to any preceding claim in which the mould means has a paper liner which becomes permanently laminated to the solidified gypsum.

15. A process according to any preceding claim in which the water in which the gypsum slurry is formed has a hardness of at least 100 ppm Ca²⁺, preferably at least 150 ppm Ca²⁺, more preferably at least 200 ppm Ca²⁺.

16. An emulsion of a mixture of a petroleum derived hydrocarbon wax and montan wax in an aqueous continuous phase containing an emulsifier system **characterised in that** the emulsifier system comprises:
i) a nonionic surfactant **characterised by** a foaming ability of at least 300 and a cloud point of at least 50; and
ii) an anionic dispersant which is a sulphated compound.

17. An emulsion according to claim 16 having the further features defined in any of claims 2 to 12.

18. A method of forming an emulsion in which a petroleum derived hydrocarbon wax and a montan wax are each melted and blended in molten form, an emulsifier system is dissolved into water to form an aqueous emulsifier solution and the molten wax mixture is dispersed into the aqueous emulsifier solution to form an emulsion, **characterised in that** the emulsifier system comprises:
i) a nonionic surfactant **characterised by** a foaming ability of at least 300 and a cloud point of at least 50; and
ii) an anionic dispersant which is a sulphated compound.

19. A method according to claim 18 in which the emulsifier system is as defined in any of claims 2 to 8 and 12 and/or the waxes are as defined in claim 9 and/or claim 10.

20. A method according to claim 18 or 19 in which the montan wax is used in an amount in the range 10 to 20% by weight of the emulsion, the hydrocarbon wax is used in an amount in the range 20 to 40% by weight of the emulsion and the emulsifier system is used in an amount in the range 0.5 to 6% by weight, preferably 1 to 2.5% by weight of the emulsion.

## Revendications

1. Procédé pour produire un produit de gypse impliquant les étapes suivantes :
a -- un slurry de gypse est formé dans de l'eau,
b -- le slurry est introduit dans un dispositif de moulage et le gypse est laissé à hydratation,
dans lequel un agent hydrophobe comprenant une émulsion d'un mélange de cire de d'hydrocarbure dérivé du pétrole et d'une cire Montan dans une phase aqueuse continue contenant un système émulsifiant est ajouté au slurry avant son introduction dans le dispositif de moulage, et qui est **caractérisé en ce que** le système émulsifiant comprend :
(i) un surfactant non ionique **caractérisé par** une aptitude au moussage d'au moins 300 et un point de trouble d'au moins 50, et
(ii) un dispersant anionique qui est un compose sulfaté.

2. Procédé selon la revendication 1, dans lequel le procédé est continu et implique le versement du slurry sur une courroie en continuel mouvement.

3. Procédé selon la revendication 1 ou 2, dans lequel le slurry de gypse est moussé avant son introduction dans le dispositif de moulage.

4. Procédé selon la revendication 1, dans lequel le dispersant anionique est un sulfate ou un sulfonate.

5. Procédé selon la revendication 4, dans lequel le dispersant anionique est un composé polymère, de préférence un aryl sulfonate.

6. Procédé selon la revendication 5, dans lequel le dispersant anionique est un naphtalène sulfonate, de préférence le sel de sodium.

7. Procédé selon l'une quelconque des revendications précédentes, dans lequel le surfactant non ionique est un alkanol supérieur, un alkenol, un acide alkanoic ou alkenoic or un aryl alcool (incluant le phénol) ou un acide carboxylique éthoxylé avec au moins 2 équivalents d'oxyde d'éthylène, de préférence au plus 100, par exemple de 3 à 30 équivalents d'oxyde d'éthylène.

8. Procédé selon la revendication 7, dans lequel le surfactant non ionique est un C₈₋₁₈ alkanol ou alkenol éthoxylé avec de 3 à 30 moles d'oxyde d'éthylène.

9. Procédé selon l'une quelconque des revendications précédentes, dans lequel la cire d'hydrocarbure dérivé du pétrole (a) est une cire de température de fusion élevée et de faible teneur en huile, de préférence une cire de paraffine, plus préférentiellement une cire ayant un point de congélation dans le domaine de 55 à 69°C (ASTM D938), une valeur de pénétration (par ASTM D1321) à 25°C dans le domaine de 10 à 20 mm/10 et à 50 °C d'au moins 50 mm/10 et une viscosité à 100°C (par ASTM D445) dans le domaine de 3-7 cSt.

10. Procédé selon l'une quelconque des revendications précédentes, dans lequel la cire Montan a un point de congélation dans le domaine de 67-80°C, une valeur acide (par ASTM D1980) dans le domaine de 10 à 37 mg KOH/g, une valeur de saponification (par ASTM D1962) dans le domaine de 35 à 100 mgKOH/g, une viscosité (par ASTM D445) à 90°C dans le domaine de 20-400 cSt et à 100 °C dans le domaine de 20 à 200 cSt.

11. Procédé selon l'une quelconque des revendications précédentes, dans lequel, dans l'émulsifiant, la cire Montan est présente en quantité dans le domaine de 10 à 20 % en poids, la cire d'hydrocarbure est présente en quantité dans le domaine de 20 à 40 % en poids et le système émulsifiant est présent en quantité dans le domaine de 1 à 6 % en poids.

12. Procédé selon l'une quelconque des revendications précédentes, dans lequel le rapport du dispersant anionique au surfactant non ionique dans l'émulsion est dans le domaine de 5:1 à 1:5, de préférence de 3:1 à 1:3.

13. Procédé selon l'une quelconque des revendications précédentes, dans lequel l'émulsion est ajoutée au slurry de gypse en quantité de 0,5 à 10 %, de préférence de 1,0 à 5,0 % en poids sur base du poids du gypse.

14. Procédé selon l'une quelconque des revendications précédentes, dans lequel le dispositif de moulage possède un fourreau de papier qui est laminé de manière permanente avec le gypse solidifié.

15. Procédé selon l'une quelconque des revendications précédentes, dans lequel l'eau dans laquelle slurry de gypse est formé a une dureté d'au moins 10 ppm Ca²⁺, de préférence d'au moins 150 ppm Ca²⁺, plus préférentiellement d'au moins 200 ppm Ca²⁺.

16. Emulsion d'un mélange de cire d'hydrocarbure dérivé de pétrole et de cire Montan dans une phase aqueuse continue contenant un système émulsifiant **caractérisé en ce que** le système émulsifiant comprend :
(i) un surfactant non ionique **caractérisé par** une aptitude au moussage d'au moins 300 et un point de trouble d'au moins 50, et
(ii) un dispersant anionique qui est un compose sulfaté.

17. Emulsion selon la revendication 16 ayant en outre les caractéristiques définies dans l'une quelconque des revendications 2 à 12.

18. Méthode pour la formation d'une émulsion dans laquelle une cire d'hydrocarbure dérivé de pétrole et une cire Montan sont chacune fondue et mélangée sous forme fondue, un système émulsifiant est dissout dans de l'eau pour former une solution aqueuse d'émulsifiant et le mélange de cire fondue est dispersé dans la solution aqueuse d'émulsifiant pour former une émulsion, **caractérisé en ce que** le système émulsifiant comprend :
(i) un surfactant non ionique **caractérisé par** une aptitude au moussage d'au moins 300 et un point de trouble d'au moins 50, et
(ii) un dispersant anionique qui est un compose sulfaté.

19. Méthode selon la revendication 18, dans laquelle le système émulsifiant est défini comme dans l'une quelconque des revendications 2 à 8 et 12 et/ou les cires sont définies comme dans la revendication 9 ou 10.

20. Méthode selon la revendication 18 ou 19, dans laquelle la cire Montan est utilisée en quantité dans le domaine de 10 à 20% en poids de l'émulsion, la cire d'hydrocarbure est utilisée en quantité dans le domaine de 20 à 40 % en poids de l'émulsion et le système émulsifiant est utilisé en quantité dans le domaine de 0,5 à 6 % en poids, de préférence de 1 à 2,5 % en poids de l'émulsion.

## Patentansprüche

1. Verfahren zur Herstellung eines Gipsprodukts, das die folgenden Schritte einschließt:
a) eine Aufschlämmung von Gips wird in Wasser gebildet,
b) die Aufschlämmung wird in Formungsmittel eingebracht und der Gips hydratisieren gelassen,
bei dem der Aufschlämmung vor dem Einbringen in die Formungsmittel Hydrophobierungsmittel zugesetzt wird, das eine Emulsion einer Mischung von von Erdöl abgeleitetem Kohlenwasserstoffwachs und Montanwachs in wässriger kontinuierlicher Phase, die ein Emulgiersystem enthält, umfasst, **dadurch gekennzeichnet, dass** das Emulgiersystem umfasst:
i) nichtionische oberflächenaktive Substanz, die durch eine Schäumungsfähigkeit von mindestens 300 und einen Trübungspunkt von mindestens 50 gekennzeichnet ist, und
ii) anionisches Dispergiermittel, das sulfatierte Verbindung ist.

2. Verfahren nach Anspruch 1, bei dem das Verfahren kontinuierlich ist und das Gießen der Aufschlämmung auf ein sich kontinuierlich bewegendes Band einschließt.

3. Verfahren nach Anspruch 1 oder 2, bei dem die Gipsaufschlämmung vor dem Einbringen in das Formungsmittel geschäumt wird.

4. Verfahren nach Anspruch 1, bei dem das anionische Dispergiermittel Sulfat oder Sulfonat ist.

5. Verfahren nach Anspruch 4, bei dem das anionische Dispergiermittel polymere Verbindung ist, vorzugsweise Arylsulfonat.

6. Verfahren nach Anspruch 5, bei dem das anionische Dispergiermittel Naphthalinsulfonat ist, vorzugsweise das Natriumsalz.

7. Verfahren nach einem der vorhergehenden Ansprüche, bei dem die nichtionische oberflächenaktive Substanz höheres Alkanol, Alkenol, Alkan- oder Alkensäure oder Arylalkohol (einschließlich Phenol) oder Carbonsäure ist, mit mindestens zwei Äquivalenten Ethylenoxid, vorzugsweise bis 100, z.B. 3 bis 30 Äquivalenten Ethylenoxid ethoxyliert.

8. Verfahren nach Anspruch 7, bei dem die nichtionische oberflächenaktive Substanz mit 3 bis 30 mol Ethylenoxid ethoxyliertes C₈₋₁₈-Alkanol oder -Alkenol ist.

9. Verfahren nach einem der vorhergehenden Ansprüche, bei dem das von Erdöl abgeleitete Kohlenwasserstoffwachs (a) eines mit einem hohen Schmelzpunkt und einem niedrigen Ölgehalt ist, vorzugsweise paraffinisches Wachs, insbesondere ein Wachs mit einem Erstarrungspunkt im Bereich von 55 bis 69 °C (ASTM D938), einem Penetrationswert (gemäß ASTM D1321) bei 25 °C im Bereich von 10 bis 20 mm/10 und bei 50 °C von mindestens 50 mm/10 und einer Viskosität bei 100 °C (gemäß ASTM D445) im Bereich von 3 bis 7 cSt.

10. Verfahren nach einem der vorhergehenden Ansprüche, bei dem das Montanwachs einen Erstarrungspunkt im Bereich von 67 bis 80 °C, einen Säurewert (gemäß ASTM D1980) im Bereich von 10 bis 37 mgKOH/g, einen Verseifungswert (gemäß ASTM D1962) im Bereich von 35 bis 100 mgKOH/g, eine Viskosität (gemäß ASTM D445) bei 90 °C im Bereich von 20 bis 400 cSt und bei 100 °C im Bereich von 20 bis 200 cSt aufweist.

11. Verfahren nach einem der vorhergehenden Ansprüche, bei dem das Montanwachs in dem Emulgiermittel in einer Menge im Bereich von 10 bis 20 Gew.-% vorhanden ist, das Kohlenwasserstoffwachs in einer Menge im Bereich von 20 bis 40 Gew.-% vorhanden ist und das Emulgiersystem in einer Menge im Bereich von 1 bis 6 Gew.-% vorhanden ist.

12. Verfahren nach einem der vorhergehenden Ansprüche, bei dem das Verhältnis von anionischem Dispergiermittel zu nichtionischer oberflächenaktiver Substanz in der Emulsion im Bereich von 5 : 1 bis 1 : 5, vorzugsweise 3 : 1 bis 1 : 3 liegt.

13. Verfahren nach einem der vorhergehenden Ansprüche, bei dem die Emulsion in einer Menge von 0,5 bis 10 Gew.-%, vorzugsweise im Bereich von 1,0 bis 5 Gew.-%, bezogen auf das Gewicht von Gips, zu der Gipsaufschlämmung gegeben wird.

14. Verfahren nach einem der vorhergehenden Ansprüche, bei dem das Formungsmittel Papierauskleidung aufweist, die permanent auf den verfestigten Gips laminiert wird.

15. Verfahren nach einem der vorhergehenden Ansprüche, bei dem das Wasser, in dem die Gipsaufschlämmung gebildet wird, eine Härte von mindestens 100 ppm Ca²⁺, vorzugsweise mindestens 150 ppm Ca²⁺, insbesondere mindestens 200 ppm Ca²⁺ aufweist.

16. Emulsion einer Mischung von von Erdöl abgeleitetem Kohlenwasserstoffwachs und Montanwachs in wässriger kontinuierlicher Phase, die ein Emulgiersystem enthält, **dadurch gekennzeichnet, dass** das Emulgiersystem umfasst:
i) nichtionische oberflächenaktive Substanz, die durch eine Schäumungsfähigkeit von mindestens 300 und einen Trübungspunkt von mindestens 50 gekennzeichnet ist, und
ii) anionisches Dispergiermittel, das sulfatierte Verbindung ist.

17. Emulsion nach Anspruch 16, welche die in einem der Ansprüche 2 bis 12 definierten weiteren Merkmale aufweist.

18. Verfahren zur Bildung eine Emulsion, bei dem von Erdöl abgeleitetes Kohlenwasserstoffwachs und Montanwachs jeweils geschmolzen und im geschmolzenen Zustand gemischt werden, ein Emulgiersystem in Wasser aufgelöst wird, um eine wässrige Emulgierlösung zu bilden, und die geschmolzene Wachsmischung in der wässrigen Emulgierlösung dispergiert wird, um eine Emulsion zu bilden, **dadurch gekennzeichnet, dass** das Emulgiersystem umfasst:
i) nichtionische oberflächenaktive Substanz, die durch eine Schäumungsfähigkeit von mindestens 300 und einen Trübungspunkt von mindestens 50 gekennzeichnet ist, und
ii) anionisches Dispergiermittel, das sulfatierte Verbindung ist.

19. Verfahren nach Anspruch 18, bei dem das Emulgiersystem wie in einem der Ansprüche 2 bis 8 und 12 definiert ist und/oder die Wachse wie in Anspruch 9 und/oder Anspruch 10 definiert sind.

20. Verfahren nach Anspruch 18 oder 19, bei dem das Montanwachs in einer Menge im Bereich von 10 bis 20 Gew.-% der Emulsion verwendet wird, das Kohlenwasserstoffwachs in einer Menge im Bereich von 20 bis 40 Gew.-% der Emulsion verwendet wird und das Emulgiersystem in einer Menge im Bereich von 0,5 bis 6 Gew.-%, vorzugsweise 1 bis 2,5 Gew.-% der Emulsion verwendet wird.
